# EUROPÄISCHE PATENTSCHRIFT

(11) **EP 0 839 863 B1**
(45) Veröffentlichungstag und Bekanntmachung des Hinweises auf die Patenterteilung: **18.04.2001**
(21) Anmeldenummer: 97118604.4
(22) Anmeldetag: 27.10.1997
(51) Int. Cl.: C08L 21/00, C08K 3/04, C08K 3/36, B60C 1/00

(54) **Kautschukmischung für Reifenlaufstreifen**
Rubber composition for tyre treads
Composition de caoutchouc pour bandes de roulement pour pneumatiques

(30) Priorität: 29.10.1996 DE 19644888
(43) Veröffentlichungstag der Anmeldung: 06.05.1998
(73) Patentinhaber: Continental Aktiengesellschaft, 30165 Hannover (DE)
(72) Erfinder: Stevens, Hendrik, Dr., 30419 Hannover (DE); Wilhelm, Ulf, Dr., 30827 Garbsen (DE); Busmann, Dirk, Dr., 30165 Hannover (DE)

(56) Entgegenhaltungen:
- EP-A- 0 708 136

## Beschreibung

Die Erfindung betrifft eine mit Schwefel vulkanisierbare Kautschukmischung für zumindest den Teil eines Reifens, der mit der Fahrbahn in Berührung kommt, die zumindest ein Dienelastomer, Ruß, feinverteilte Kieselsäure und weitere übliche Zusatzstoffe enthält.

Um die Laufleistung eines Reifens, die wesentlich von dessen Laufstreifenzusammensetzung abhängt, zu verbessern, wurden zahlreiche Versuche unternommen, durch Variation der Mischungszusammensetzung die Reifeneigenschaften zu optimieren. So ist bekannt, in Mischungen für Laufstreifen, dessen Teile mit der Fahrbahn in Kontakt treten, als Füllstoffe sowohl Ruß als auch Kieselsäure einzusetzen. Dabei wirkt sich die Kieselsäure positiv auf den Rollwiderstand des Reifens aus. Durch die Verringerung des Rollwiderstandes, was auch eine geringere Geräuschentwicklung mit sich bringt, werden gleichzeitig aber die Naßhaftung und das Handling (Spurführung) negativ beeinflußt. So ist vor allem die Haftung des Reifens auf nasser oder feuchter Fahrbahn insbesondere bei Fahrzeugen ohne Antiblockiersystem unbefriedigend. Weiterhin nachteilig bei den kieselsäurehaltigen Laufstreifenmischungen ist, daß sie einen erhöhten Abrieb zum Beispiel im Vergleich zu Ruß enthaltenden Laufstreifenmischungen verzeichnen. Aufgrund der geringen Leitfähigkeit von kieselsäurehaltigen Mischungen neigen diese zu einer elektrischen Aufladung des Reifens. Dies kann zu erhöhter Feuergefährlichkeit durch elektrische Entladungen in Umgebungen führen, wo entzündliche Flüssigkeiten oder Dämpfe auftreten. Um die Nachteile der Kieselsäure zu kompensieren, werden Verschnitte aus Kieselsäure und Ruß eingesetzt. Allerdings erreichen diese Mischungen nicht das Niveau der Kieselsäuremischungen bezüglich des Rollwiderstandes.

Die Aufgabe der hier vorliegenden Erfindung besteht darin, eine Kautschukmischung zumindest für den Teil eines Reifens (Laufstreifenteil), der mit der Fahrbahn in Berührung kommt, bereitzustellen, die einen geringen Rollwiderstand aufweist.

Diese Aufgabe wird erfindungsgemäß dadurch gelöst, daß eine mit Schwefel vulkanisierbare Kautschukmischung bezogen auf 100 Gewichtsteile der Gesamtkautschukmasse
a) 100 pphr zumindest eines Dienelastomeren ausgewählt aus Naturkautschuk, synthetischem Polyisopren, Polybutadien, Acrylnitril-Butadien-Copolymer, Styrol-Butadien-Copolymer und/oder Mischungen hieraus,
b) einen Füllstoffanteil von 35 - 100 pphr, wobei davon
   b 1) 12 - 97 % Ruß mit
      - einem mittleren Teilchendurchmesser von 20 - 40 nm,
      - einem DBP/CTAB-Verhältnis > 1,5, wobei die DBP-Zahl > 145 ml/100 g und die CTAB-Zahl 70 - 110 m²/g beträgt und
      - einer CDBP-Zahl > 100 ml/100 g und
   b 2) 3 - 88 % feinverteilte Kieselsäure mit
      - einer BET-Oberfläche von 145 - 270 m²/g
      - einer CTAB-Zahl von 120 - 285 m²/g und
      - einem Porenvolumen von 0,7 - 1,7 ml/g und
c) weitere übliche Zusatzstoffe enthält.

Es wurde überraschenderweise festgestellt, daß die Verbesserung des Rollwiderstandes durch Kombination des erfindungsgemäß eingesetzten Rußes mit Kieselsäure erreicht wird.

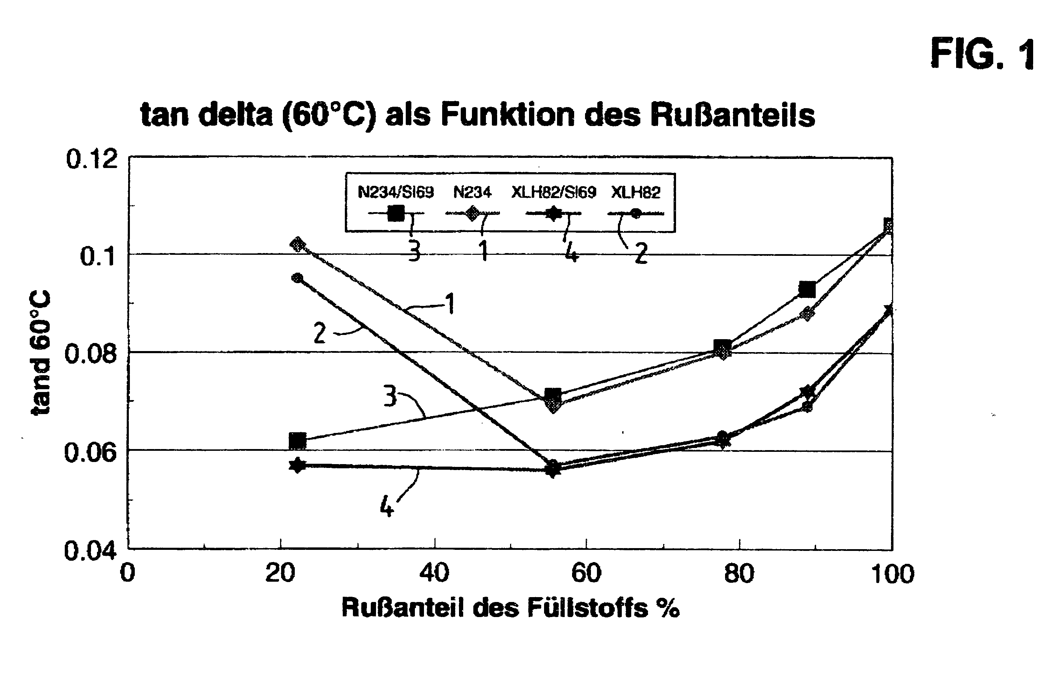

Der Unterschied zu herkömmlichen Mischungen aus bisher bekanntem Ruß und Kieselsäure wird in der Figur 1 deutlich. Die Kurven 1 und 3 stellen die Abhängigkeit des tand-Wertes bei 60° C (Maß für den Rollwiderstand) vom Rußgehalt der auch Kieselsäure enthaltenden Kautschukmischung dar, wobei herkömmlicher Ruß verwendet wird. Als Beispiele für Ruße aus dem Stand der Technik seien an dieser Stelle die Ruße N 115, N 121, N 220, N 234 und N 339 mit folgenden Charakteristika genannt (Tabelle 1):

**Tabelle 1**

| Ruß-Typ | DBP-Zahl | CDBP-Zahl | CTAB-Zahl | DBP/CTAB |
|---|---|---|---|---|
| N 110 | 113 | 98 | 137 | 0,8 |
| N 121 | 133 | 110 | 122 | 1,1 |
| N 220 | 114 | 100 | 110 | 1 |
| N 234 | 125 | 99 | 121 | 1 |
| N 339 | 119 | 97 | 86 | 1,4 |

Unter der DBP-Zahl soll die Dibutylphthalatadsorption verstanden werden, die durch ASTM D 2414 ermittelt wurde. Die CDBP-Zahl (DBP-Messung mittels 24 M 4-Methode) wurde gemäß ASTM D 3493 bestimmt. Die CTAB-Zahl (Cetyltrimethylammoniumbromid-Zahl) wurde mittels ASTM D 3765 und der mittlere Partikeldurchmesser des Rußes nach der Vorschrift ASTM D 3849 analysiert. Die verwendete Kieselsäure weist eine BET-Oberfläche von 145 - 270 m²/g auf, die durch ASTM D 5604 bestimmt wurde. Das Porenvolumen (0,7 - 1,7 ml/g) wurde nach DIN 66133 ermittelt und die CTAB-Zahl (120 - 285 m²/g durch ASTM D 3765. Im Vergleich der Kurven 2 und 4 der Figur 1 mit den Kurven 1 und 3 wird ersichtlich, daß die Ruße der Kurven 2 und 4 der Kieselsäure enthaltenden Kautschukmischungen im wesentlichen eine höhere Rückprallelastizität (niedrigere tand-Werte) verleihen als herkömmliche Ruße (Kurven 1 und 3). Diese neuartigen Ruße sind durch folgende Merkmale charakterisiert (Tabelle 2):

**Tabelle 2**

| Ruß-Typ | DBP-Zahl | CDBP-Zahl | CTAB-Zahl | DBP/CTAB |
|---|---|---|---|---|
| A | 155 | 111 | 81 | 1,9 |
| B | 175 | 118 | 79 | 2,2 |

Diese neuartigen Ruße bewirken sowohl in mit nicht silanierter (nicht mit einem Silan behandelter) Kieselsäure gefüllten Mischungen (Kurve 2) als auch in mit silanierter Kieselsäure gefüllten Mischungen (Kurve 4) eine Verminderung der tand-Werte, die eine Verringerung des Rollwiderstandes der entsprechenden Reifenlaufstreifen bedeuten. Der Vergleich der Kurven 4 (neuer Ruß + silanierte Kieselsäure) mit der Kurve 3 (herkömmlicher Ruß + silanierte Kieselsäure) zeigt, daß die Kurve 3 mit höherem Rußanteil konstant ansteigt. Im Gegensatz dazu weist die Kurve 4 (erfindungsgemäßer Ruß + silanierte Kieselsäure) bis zu einem Rußanteil von ca. 50 % einen konstanten Wert auf und erst bei einem Rußgehalt von ca. 80 % nimmt der tand der Mischung drastisch zu. Das bedeutet, daß bis zu einem Rußgehalt von ca. 50 % (neuer Ruß) die Mischung bezüglich des Rollwiderstandes die gleichen hervorragenden Eigenschaften aufweist, wie eine Mischung, die nur 20 % neuartigen Ruß enthält. Erst wenn der Rußanteil größer als 50 % wird, verschlechtern sich langsam die tand-Werte, jedoch wird bei einem Gehalt von 80 % an erfindungsgemäßen Ruß immer noch ein tand-Wert erreicht, die dem bei 20 % herkömmlichen Ruß (Kurve 3) entspricht. Auch zeigt die Kurve 2 (erfindungsgemäßer Ruß + nicht silanierte Kieselsäure) ab ca. 55 % Ruß einen ähnlichen Kurvenverlauf. Das bedeutet, daß auf einen hohen Gehalt an Kieselsäure verzichtet werden kann und trotzdem gute Eigenschaften bezüglich des Rollwiderstandes erreicht werden. Die Nachteile, die bei stark kieselsäuregefüllten Mischungen auftraten (hohe elektrostatische Aufladung), können somit ausgeschaltet werden, ohne Einbußen im Rollwiderstand hinnehmen zu müssen. Der Verlauf der Kurven 2 und 4 zeigt, daß bei einem Rußanteil von 50 bis 80 %, bezogen auf den gesamten Füllstoffanteil, die geringsten tand-Werte zu verzeichnen sind, die diesen Rußanteil als vorteilhaft erweisen.

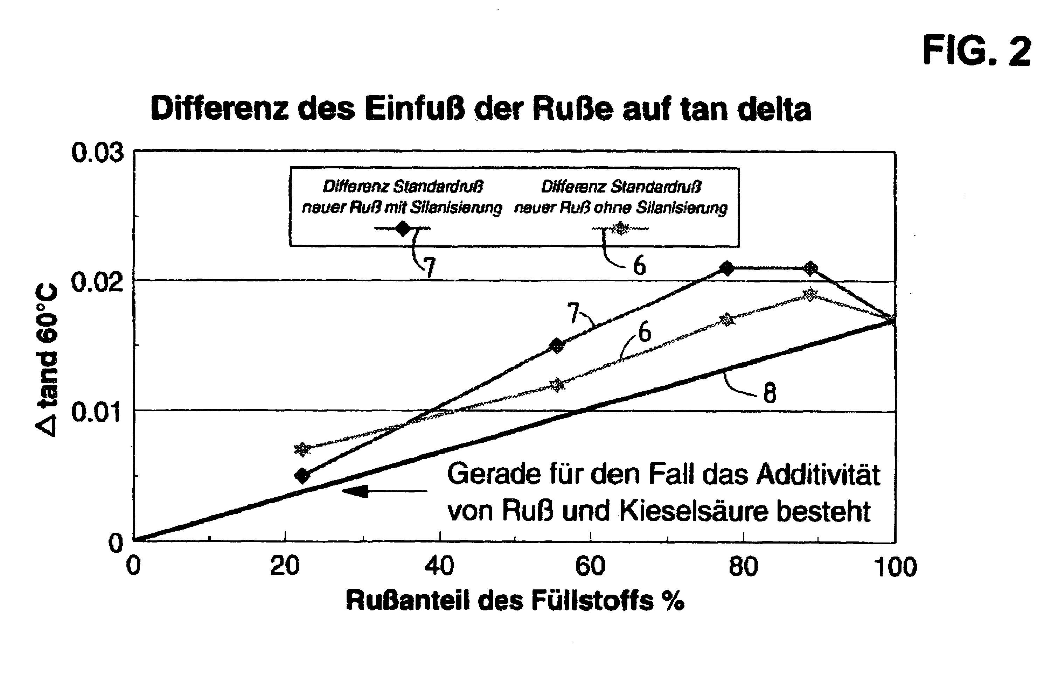

Unerwartet dabei ist, daß es sich bei der Erhöhung der Rückprallelastizität (Verringerung der tand-Werte) bei der Kautschukmischung, die den neuartigen Ruß und Kieselsäure (nicht silaniert bzw. silaniert) enthält, nicht um eine rein additive Erscheinung handelt. Das wird in der Figur 2 deutlich. In dieser Graphik ist die Differenz der tand 60°C-Werte von herkömmlichem Ruß und neuem Ruß gegen den Rußanteil des Füllstoffs aufgetragen. Zum Erhalt der Kurve 6 wurden die einzelnen tand 60°C-Werte der Kurve 2 (neuer Ruß + nicht silanierte Kieselsäure) von der Kurve 1 (alter Ruß + nicht silanierte Kieselsäure) subtrahiert. Die Kurve 7 wurde durch Differenzbildung der tand 60°C-Werte der Kurven 3 und 4 erhalten. Aus der Figur 2 wird ersichtlich, daß, wenn beide Ruße (herkömmlicher und neuer) mit der Kieselsäure (silaniert oder unsilaniert) in gleichem Maße eine Wechselwirkung eingehen würden, sich die Gerade 8 ergeben müßte. Überraschender Weise wurde aber ermittelt, daß ein synergistischer Effekt zwischen neuartigem Ruß und Kieselsäure vorhanden ist, der sich positiv auf die tand-Werte auswirkt.

Besonders überraschend stellte sich heraus, daß eine Aktivierung der Kieselsäure (chemische Modifikation der Kieselsäureoberfläche), die durch eine chemische Reaktion z. B. mit einem Silan erzeugt wird, beim Einsatz des erfindungsgemäßen Rußes nicht mehr erforderlich ist (Kurve 2), ohne daß Einbußen im Rollwiderstand im Vergleich zu herkömmlichen Mischungen hingenommen werden müssen. Ein Vergleich der tand-Werte von Kautschukmischungen, die herkömmlichen Ruß und nicht silanierte Kieselsäure (Kurve 1) bzw. neuartigen mit nicht silanierter Kieselsäure (Kurve 2) enthalten, ist in der Figur 1 dargestellt. Die Verläufe der Kurven 1 und 2 zeigen, daß bei einem Rußanteil von bis zu ca. 50 t die tand-Werte abnehmen und danach ein Anstieg zu verzeichnen ist, Bei der Verwendung des erfindungsgemäßen Rußes mit nicht silanierter Kieselsäure (Kurve 2) ist festzustellen, daß sich die tand-Werte auf einem viel niedrigeren Niveau bewegen als bei herkömmlichem Ruß. Auch bei Verwendung von nicht silanierter Kieselsäure hat sich ein Rußanteil von 50 - 80 % als bevorzugt erwiesen. Die Figur 2 (Kurve 6) zeigt, wie bereits erwähnt, aber auch in diesem Fall, daß es sich nicht um einen rein additiven Effekt von herkömmlichem Ruß und Kieselsäure bezüglich der Auswirkungen auf die tand-Werte handelt. Somit wird es möglich, auf die Zugabe eines Silanierungsmittels zu verzichten, das eigentlich dazu dienen soll, eine gute Anbindung der Kieselsäure an die Kautschukmatrix zu gewährleisten. Durch die Kombination des neuartigen Rußes mit nicht aktivierter Kieselsäure werden trotzdem Kautschukmischungen erzielt, die hervorragende Eigenschaften aufweisen, insbesondere den Rollwiderstand von Reifenlaufflächen in hohem Maße verringern. Außerdem wird bei der Herstellung der Kautschukmischung Zeit und Energie gespart, da auf das Einmischen von Silanen verzichtet werden kann.

Es werden erfindungsgemäß Kautschukmischungen für Reifenlaufstreifen erzielt, bei denen vorteilhafterweise der Kieselsäureanteil nur zwischen 20 und 50 % bezogen auf den gesamten Füllstoffgehalt beträgt. Da der restliche Füllstoffanteil im wesentlichen der neuartige Ruß bildet, werden Reifenlaufstreifen erreicht, die eine höhere Leitfähigkeit als hoch Kieselsäure gefüllte Mischungen aufweisen bei gleichzeitig geringem Rollwiderstand. Diese Kautschukmischungen sind leichter verarbeitbar und kostengünstiger bei der Herstellung.

Unter üblichen Zusatzstoffen sollen erfindungsgemäß u. a. Vulkanisationsbeschleuniger, Alterungsschutzmittel, Weichmacher, Schwefelspender gefaßt werden. Für die Vernetzung des Kautschuks wird ein Gesamtschwefelanteil von 0,3 - 2,5 pphr eingesetzt. Als Vulkanisationsbeschleuniger werden vorzugsweise herkömmliche Beschleuniger aus der Klasse der Sulfenamide (CBS, TBBS) eingesetzt. Als Zweitbeschleuniger können z. B. Benzthiazole, Thiophosphate, vorzugsweise Diphenylguanidin (DPG) verwendet werden. Eine Gesamtbeschleunigerkonzentration von 3,5 pphr sollte nicht überschritten werden. Als Silanierungsmittel soll vorzugsweise Bis-3-(triethoxsilylpropyl)tetrasulfid (TESPT) verwendet werden. Anhand eines Ausführungsbeispieles soll die Erfindung näher erläutert werden.

Die erfindungsgemäße Kautschukmischung wird zumindest in dem Reifenlaufstreifenteil, der mit der Fahrbahn in Berührung kommt, eingesetzt, denn nur dort wirken sich die genannten Vorteile z. B. hinsichtlich Ableitfähigkeit und Rollwiderstand positiv aus. So ist es möglich, daß Laufstreifen für Fahrzeugluftreifen aus Cap (mit der Fahrbahn in Berührung kommende Fläche des Laufstreifens) und Base aufgebaut sind.

Es soll erfindungsgemäß zumindest die Cap aus der beschriebenen Kautschukmischung bestehen. Bei einem einteiligen Laufstreifenaufbau besteht dieser aus der erfindungsgemäßen Kautschukmischung.

Die Tabelle 3 zeigt eine Mischungszusammensetzung mit Eigenschaften für PKW-Laufstreifen. Beim Einsatz für PkW werden Fahrzeugreifen verwendet, deren Lauffläche vorteilhafterweise 60 pphr eines Dienelastomern ausgewählt aus synthetischen Polyisopren, Polybutadien Acrynitril-Butadien-Copolymer, Styrol-Butadien-Copolymer und/oder Mischungen hieraus enthält und einen Füllstoffanteil zwischen 60 und 100 pphr aufweist. Die angegebenen Bestandteile sind auf 100 Gewichtsteile Kautschuk bezogen (pphr).

**Tabelle 3**

| Bestandteil[pphr] | Standard | 1 | 2 | 3 | 4 |
|---|---|---|---|---|---|
| Naturkautschuk | 10 | 10 | 10 | 10 | 10 |
| Butadienkautschuk | 35 | 35 | 35 | 35 | 35 |
| Styrol-Butadien-Kautschuk (Lösungspolym.) | 55 | 55 | 55 | 55 | 55 |
| Kieselsäure A | 70 | 70 | 50 | 40 | - |

| (Ultrasil-Fa. Degussa) | | | | | |
|---|---|---|---|---|---|
| Kieselsäure B (BV 3370-Degussa) | - | - | - | - | 40 |
| X50 S(TESPT auf N 330) | 12.5 | 12.5 | 8.9 | 7.1 | 7.1 |
| Ruß N 121 | 10 | - | - | - | - |
| Ruß A (Tabelle 2) | - | 10 | 30 | 40 | 40 |
| gesamtes Öl | 34 | 34 | 37 | 37 | 37 |
| Diphenylquanidin (DPG) | 2 | 2 | 2 | 2 | 2 |
| Schwefel | 1.5 | 1.5 | 1.5 | 1.5 | 1.5 |
| Benzothiazyl-2-cyclo hexylsulfenamid | 1.5 | 1.5 | 1.5 | 1.5 | 1.5 |

| Eigenschaften | Standard | 1 | 2 | 3 | 4 |
|---|---|---|---|---|---|
| Härte (Shore A, Raumtemp.) | 66 | 64,7 | 63,1 | 65,4 | 63,9 |
| Härte (Shore A, 70°C) | 63,9 | 63,7 | 61,9 | 62,9 | 62,1 |
| Rückprallelastizität (Raumtemp.) [%] | 35.2 | 37 | 36,6 | 35 | 35,2 |
| Rückprall-Elastizität 70°C [%] | 55 | 55.2 | 54.8 | 55.6 | 54.8 |
| Modul 300 % [MPa] | 10,39 | 9,9 | 9,32 | 11.05 | 10,87 |
| Zugfestigkeit [MPa] | 14,98 | 15,26 | 12,58 | 14,08 | 15,73 |
| Bruchdehnung [%] | 427 | 453 | 414 | 402 | 448 |
| Rollwiderstandsindex [%] | 100 | 104 | 105 | 100 | 102 |

In den Beispielen 1 - 4 wurde der erfindungsgemäße Ruß A in Kombination mit Kieselsäure eingesetzt. Dabei zeigte sich, daß die Art der eingesetzten Kieselsäure auf den Rollwiderstand keinen Einfluß hat (Beispiele 3 und 4). Des weiteren wurde mit zunehmendem Rußgehalt (Beispiele 1 - 3) keine Verschlechterung des Rollwiderstandes festgestellt.

Aber nicht nur für PKW-Reifenlaufstreifen zeigen sich die Vorteile des erfindungsgemäßen Mischungskonzeptes. Besonders für LKW-Reifen ist der Rollwiderstand eine wichtige Optimierungsgröße, da ein geringer Wärmeaufbau (geringer Rollwiderstand) im Laufstreifen eine verminderte Wärmebelastung des Gürtels bewirkt und damit die Gürtelhaltbarkeit verbessert wird.

In der Tabelle 4 ist eine erfindungsgemäße Mischung für LKW-Laufstreifen sowie deren Eigenschaften angegeben, auf deren Grundlage im übrigen die Figuren 1 und 2 zumindest teilweise basieren. Die Zusammensetzungen beziehen sich wiederum auf 100 Teile Gesamtkautschuk [pphr]. Vorteilhafterweise werden für LkW-Laufflächen Kautschukmischungen verwendet, die zumindest 60 pphr Naturkautschuk und einen Füllstoffanteil von ca. 35 bis 60 pphr aufweisen.
Der in der Tabelle 4 Ruß ISAF soll den Rußtyp N 220 darstellen.

Die Tabelle 4 verdeutlicht, daß eine Abnahme des tand 60°C bei den erfindungsgemäßen Mischungen 10 bis 13 bzw. 15 bis 19 zu verzeichnen ist, und zwar in einem geringeren Maße als bei fallendem Anteil herkömmlichen Rußes (Mischungen 1 bis 9).

Dieser unerwartete Effekt ermöglicht es nun auch, LKW-Reifen zur Verfügung zu stellen, die einen geringen Rollwiderstand aufweisen, ohne dabei andere Eigenschaftseinbußen hinzunehmen.

Sowohl PkW als auch LkW-Reifen sollen einen im Stand der Technik bekannten Aufbau aufweisen.

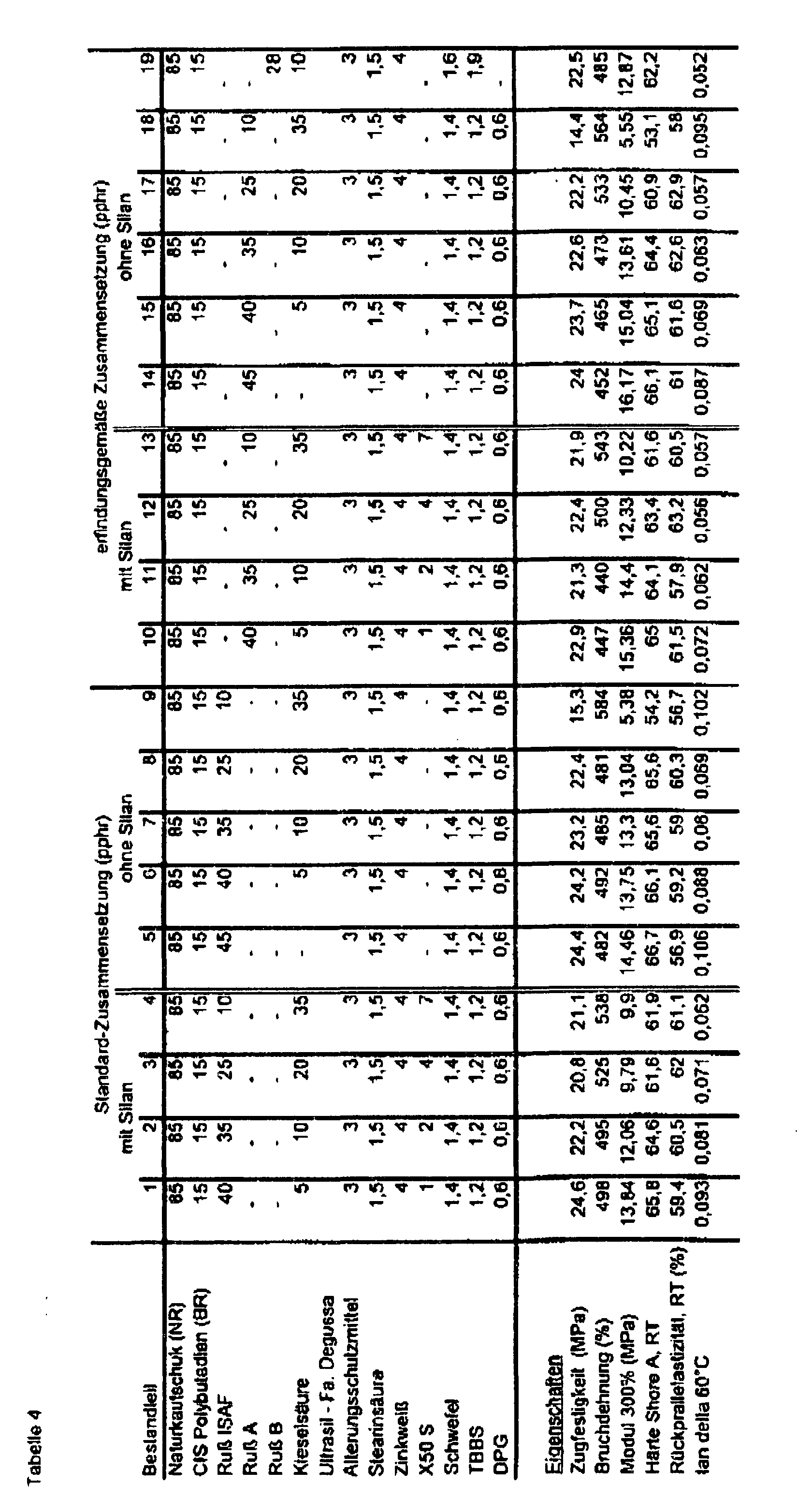

## Patentansprüche

1. Mit Schwefel vulkanisierbare Kautschukmischung, für zumindest den Teil des Reifens, der mit der Fahrbahn in Berührung kommt, die bezogen auf 100 Gewichtsteile der Gesamtkautschukmasse,
a) 100 pphr zumindest eines Dienelestomeren ausgewählt aus Naturkautschuk, synthetischem Polyisopren, Polybutadien, Acrylnitril-Butadien-Copolymer, Styrol-Butadien-Copolymer und/oder Mischungen hieraus,
b) einen Füllstoffanteil von 35 - 100 pphr, wobei davon
b1) 12 - 97 % Ruß mit
- einem mittleren Teilchendurchmesser von 20-40 nm.
- einem DBP/CTAB-Verhältnis >1,5, wobei die DBP-Zahl >145 ml/100 g und die CTAB-Zahl 70 110 m²/g beträgt und
- einer CDBP-Zahl >100 ml/100 g und
b2) 3 - 88 % feinverteilte Kieselsäure mit
- einer BET-Oberfläche von 145-270 m²/g
- einer CTAB-Zahl von 120-285 m²/g und
- einem Porenvolumen von 0,7-1,7 ml/g und
c) weitere übliche Zusatzstoffe enthält.

2. Kautschukmischung nach Anspruch 1, dadurch gekennzeichnet, daß sie zumindest 60 pphr Naturkautschuk enthält, und einen Füllstoffanteil zwischen 35 und 60 pphr aufweist.

3. Kautschukmischung nach Anspruch 1, dadurch gekennzeichnet, daß sie zumindest 60 pphr eines Dienelastomern ausgewählt aus synthetischem Polyisopren, Polybutadien, Acrylnitril-Butadien-Copolymer, Styrol-Butadien-Copolymer und/oder Mischungen hieraus enthält und einen Füllstoffanteil zwischen 60 und 100 pphr aufweist.

4. Kautschukmischung nach zumindest einem der vorhergehenden Ansprüche, dadurch gekennzeichnet, daß der Rußanteil zwischen 50 und 80 % beträgt.

5. Kautschukmischung nach Anspruch 4, dadurch gekennzeichnet, daß sie nicht aktivierte Kieselsäure enthält.

6. Kautschukmischung nach zumindest einem der Ansprüche 1 bis 4, dadurch gekennzeichnet, daß sie als Silanierungsmittel Bis-3(-triethoxsilylpropyl)tetrasulfid (TESPT) enthält.

7. Fahrzeugreifen, dadurch gekennzeichnet, daß dieser einen Laufstreifen aufweist, dessen zumindest mit der Fahrbahn in Berührung kommende Fläche aus einer Kautschukmischung nach zumindest dem Anspruch 1 hergestellt ist.

## Claims

1. Rubber mixture, which is vulcanisable with sulphur, for at least the part of the tyre which comes into contact with the roadway, said mixture containing, relative to 100 parts by weight of the total rubber composition,
a) 100 pphr of at least one diene elastomer selected from natural rubber, synthetic polyisoprene, polybutadiene, acrylonitrile-butadiene copolymer, styrene-butadiene copolymer and/or mixtures thereof,
b) a proportion of filler of 35 - 100 pphr, of which
b1) 12 - 97 % is carbon black with
- a mean particle diameter of 20-40 nm,
- a DBP/CTAB ratio > 1.5, the DBP number being > 145 ml/100 g and the CTAB number being 70 - 110 m²/g, and
- a CDBP number > 100 ml/100 g, and
b2) 3 - 88 % is finely dispersed silica with
- a BET surface of 145-270 m²/g
- a CTAB number of 120-285 m²/g and
- a pore volume of 0.7-1.7 ml/g, and
c) further conventional additives.

2. Rubber mixture according to claim 1, characterised in that it contains at least 60 pphr natural rubber and has a proportion of filler between 35 and 60 pphr.

3. Rubber mixture according to claim 1, characterised in that it contains at least 60 pphr of a diene elastomer selected from synthetic polyisoprene, polybutadiene, acrylonitrile-butadiene copolymer, styrene-butadiene copolymer and/or mixtures thereof and has a proportion of filler between 60 and 100 pphr,

4. Rubber mixture according to at least one of the preceding claims, characterised in that the proportion of carbon black is between 50 and 80 %.

5. Rubber mixture according to claim 4, characterised in that it contains non-activated silica.

6. Rubber mixture according to at least one of claims 1 to 4, characterised in that it contains bis-3(-triethoxysilylpropyl)tetrasulphide (TESPT) as the silaning agent.

7. Vehicle tyre, characterised in that said tyre has a tread strip with its surface, which comes into contact at least with the roadway, being produced from a rubber mixture according to at least claim 1.

## Revendications

1. Composition de caoutchouc pouvant être vulcanisée à l'aide de soufre, pour au moins la partie du pneumatique qui vient en contact avec la chaussée, cette composition contenant, d'une manière rapportée à 100 parties en poids de la masse totale de caoutchouc,
a) 100 pphr d'au moins un élastomère à base de diène, choisi parmi le caoutchouc naturel, le polyisoprène synthétique, le polybutadiène, un copolymère acrylonitrile-butadiène, un copolymère styrène-butadiène et/ou des mélanges de ces substances,
b) une charge en un pourcentage de 35-100 pphr, dont
b1) 12-97 % de suie avec
- un diamètre moyen de particules de 20-40 nm,
- un rapport DBP/CTAB > 1, 6, le nombre DBP étant > 145 ml/100 g et le nombre CTAB étant égal à 70-110 m²/g, et
- un nombre CDBP > 100 ml/100 g, et
b2) 3-88 % d'acide silicique finement divisé avec
- une surface BET égale à 145-270 m²/g,
- un nombre CTAB égal à 120-225 m²/g, et
- un volume de pores égal à 0,7-1,7 ml/g et
c) d'autres additifs usuels.

2. Composition de caoutchouc selon la revendication 1, caractérisée en ce qu'elle contient au moins 60 pphr de caoutchouc naturel et une charge en un pourcentage compris entre 35 à 60 pphr.

3. Composition de caoutchouc selon la revendication 1, caractérisée en ce qu'elle contient au moins 60 pphr d'un élastomère à base de diène choisi parmi le polyisoprène synthétique, le polybutadiène, un copolymère acrylonitrile-butadiène, un copolymère styrène-butadiène et/ou des mélanges de ces substances et une charge présente en un pourcentage compris entre 60 et 100 pphr.

4. Composition de caoutchouc selon au moins l'une des revendications précédentes, caractérisée en ce que le pourcentage de suie est compris entre 50 et 80 %.

5. Composition de caoutchouc selon la revendication 4, caractérisée en ce qu'elle contient de l'acide silicique non activé.

6. Composition de caoutchouc selon au moine l'une des revendications 1 à 4, caractérisée en ce qu'elle contient du bis-3(-triéthoxysilylpropyl)tétrasulfure (TESPT) comme agent de silanation.

7. Pneumatique pour véhicule, caractérisé en ce que ce pneumatique comporte une bande de roulement, dont au moins une surface venant en contact avec la chaussée est fabriquée en une composition de caoutchouc selon au moins la revendication 1.
